# EUROPEAN PATENT SPECIFICATION

(11) **EP 0 868 077 B1**
(45) Date of publication and mention of the grant of the patent: **10.05.2006**
(21) Application number: 98302043.9
(22) Date of filing: 18.03.1998
(51) Int. Cl.: H04N 5/225, H04N 5/232, G03B 17/14

(54) **Television camera**
Fernsehkamera
Caméra de télévision

(30) Priority: 24.03.1997 JP 8733797
(43) Date of publication of application: 30.09.1998
(73) Proprietor: IKEGAMI TSUSHINKI CO., LTD., Ohta-ku Tokyo 146 (JP)
(72) Inventor: Sano, Takeshi, Ohta-ku, Tokyo (JP); Nishimura, Masaharu, Ohta-ku, Tokyo (JP); Hino, Hideshi, Ohta-ku, Tokyo (JP)
(74) Representative: Geering, Keith Edwin

(56) References cited:
- EP-A- 0 369 785
- EP-A- 0 481 418
- GB-A- 2 080 557
- US-A- 4 637 704
- US-A- 4 922 283
- US-A- 5 012 264
- PATENT ABSTRACTS OF JAPAN vol. 010, no. 290 (P-503), 2 October 1986 & JP 61 109033 A (ASAHI OPTICAL CO LTD), 27 May 1986

## Description

The present invention relates to a broadcasting television camera associated with interchangeable lenses and more particularly, to a television camera having a mating surface in which exposed power output terminals are located to supply electrical power to its associated lens.

Typically, a broadcasting television camera system includes a television camera (hereinafter, simply referred to as "camera") and interchangeable lenses which are removably mounted on the camera and are selectively changed in accordance with needs. More specifically, the camera has a mating surface for mating engagement with a lens. A horizontal bar or mount projects from the upper portion of the mating surface and is tapered at a top surface thereof to have a V-shape. The lens also has a mating surface for engagement with the mating surface of the camera. A horizontal bar or hook is formed in the mating surface of the lens and tapered at a bottom surface thereof to have an inverted V-shape.

To mount the lens on the camera, the hook of the lens is engaged with the mount of the camera. A locking device is arranged at the lower portion of the mating surface of the camera and adapted to lock the lower portion of the lens. Connectors are attached to the mating surfaces of the camera and the lens so as to supply power and signals from the camera to the lens. When the lens is mounted on the camera, the male and female connectors are connected together. Typically, the camera has a recess, whereas the lens has a projection. The projection is fitted into the recess so as to align the lens with the camera.

The connectors in the camera include exposed power output terminals. No serious problem arises when a low voltage is applied to the exposed power output terminals while the lens is removed from the camera. The user may, however, be injured in the event that a high voltage is applied to the exposed output terminals. Such a high voltage is required, for example, where a heater as a defogger or the like is mounted within the lens.

To that end, a sensor is conventionally arranged in the mating surface of the camera to detect mounting of the lens. A voltage is applied to the power output terminals only when mounting of the lens is detected. No voltage is applied when the lens is removed from the camera.

To detect mounting of the lens, the prior art camera relies on a single sensor. A voltage may inadvertently be applied to the power output terminals if the lens is incompletely mounted on the camera. Also, if the sensor malfunctions, a voltage may be applied to the power output terminals even in the absence of any lens.

It is an object of the present invention to provide a television camera designed to inhibit application of a voltage to power output terminals when a lens is removed from the mating surface of the camera.

JP-A-61109033 discloses a television camera having means for avoiding short circuit between electric contact pins on the camera and electric contact pins on a lens whilst the lens is being mounted on the camera, said camera contact pins being live before and after lens mounting and said means comprising a lock pin which is carried by the camera and which during mounting of the lens operates a switch to render the camera contact pins dead.

GB-A-2080557 discloses an SLR camera useable with interchangeable lenses and having electromagnetic shutter control, there being provided contacts for transmitting exposure information from a lens to the camera body and means for preventing shutter release when no lens is mounted, said means comprising a circuit which detects when no contact on the camera body is receiving exposure information.

US-A-5012264 discloses a camera having a single sensor (having a pin P which moves a member 12 to operate a switch T₂) on a lens unit to apply voltage to power output terminals when the lens is mounted on the camera body.

The present invention provides a television camera comprising a mating surface adapted to mount a lens thereon, and exposed power output terminals arranged on the mating surfaces to supply power from a power source to the lens, characterized by a plurality of first sensors attached to said mating surface for detecting mounting of the lens, said first sensors being spaced apart over the mating surface; and mechanical contacts rendered operative to apply a voltage to said power output terminals only when all of said plurality of first sensors detect complete mounting of the lens.

With this arrangement, a high voltage is in no way applied to the power output terminals unless all of the first sensors detect complete mounting of the lens. The first sensors are operable to develop sensor signals in the form of logical product. In this way, no voltage is applied to the power output terminals in the event of incomplete mounting of the lens if a first sensor inadvertently develops a signal indicative of complete mounting of the lens. Also, no voltage is applied in the absence of any lens even if any of the sensors malfunctions. The user is thus free from an electrical shock upon accidental contact with the power output terminals when the lens is incompletely mounted or the lens is not mounted on the camera. The camera is therefore safe to use.

Preferably, the television camera includes a second sensor mounted on the mating surface for detecting mounting of the lens, and an electrical contact rendered operative when the second sensor detects complete mounting of the lens. A voltage is applied to the power output terminals when the mechanical contacts and the electrical contact are simultaneously rendered operative.

The mechanical contacts are rendered inoperative unless all of the first sensors detect complete mounting of the lens on the television camera. Specifically, each of the first sensors is operable to develop a signal in the form of logical product so as to determine whether or not the mechanical contacts are to be operated. In addition, the electrical contact is rendered inoperative unless the second sensor detects complete mounting of the lens on the television camera. With these two safety measures, no voltage is applied to the power output terminals unless the mechanical contacts and the electrical contacts are operated in a simultaneous manner. There is no possibility that a voltage is applied to the power output terminals in the event of incomplete mounting of the lens or in the absence of any lens when a failure occurs in any one of the sensors.

The present invention will now be described, by way of example, with reference to the accompanying drawings, in which:
Fig. 1 is a block diagram of a television camera according to one embodiment of the present invention;
Fig. 2 is a front view of the television camera; and
Fig. 3 is a side view of the television camera with its associated lens.

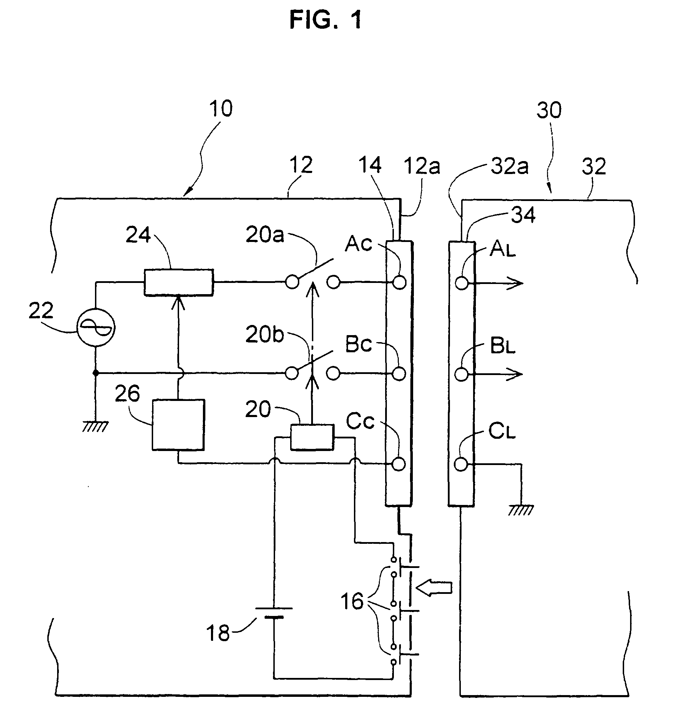

In Fig. 1, a television camera 10 according to one embodiment of the present invention and a lens 30 are shown in block diagram form. In a typical broadcasting television camera system, a camera and lenses are separate components. Various lenses are interchangeably mounted on the camera in accordance with specific needs. In this embodiment, the lens 30 is removably mounted on the camera 10 likewise.

As shown, the camera 10 includes a housing 12 within which various electronic components and the like are arranged. The housing 12 has a mating surface 12a for mating engagement with the lens 30. A female connector 14 is attached to the mating surface 12a and includes two power output terminals Ac and Bc and a sensor terminal Cc. Three push-button switches 16 are also attached to the mating surface 12a and are turned on when pushed. The push-button switches 16 are connected in series and cooperate with a battery or DC power source 18 and a relay 20 to form a circuit. When all the three push-button switches 16 are rendered "on", the battery or DC power source 18 is operable to apply a voltage to energize the relay 20.

The relay 20 includes two relay contacts 20a and 20b as mechanical contacts. The relay contacts 20a and 20b are rendered closed when a voltage is applied from the battery or DC power source 18 to the relay 20. The relay contacts 20a and 20b are opened in the absence of any voltage. It is to be noted that the push-button switches 16 and the sensor terminal Cc respectively correspond to the first sensor s and the second sensor which are defined in the claims.

A single-phase AC power source 22 is located within the housing 12 to provide a voltage of, for example, 220 V at which level the user may be injured upon contact. The AC power source 22 has two output terminals. One of the two output terminals is connected to the housing 12 at ground potential and also to the output terminal Bc of the female connector 14 through the relay contact 20b of the relay 20. The other output terminal is serially connected to the output terminal Ac of the female connector 14 through a triac 24 and the relay contact 20a of the relay 20. The triac 24 serves as an electrical contact. A control circuit 26 is arranged in the housing 12 to control the triac 24. The control circuit 26 has one end connected to the triac 24 and the other end connected to the sensor terminal Cc of the female connector 14. When the sensor terminal Cc is connected to ground, the control circuit 26 is operable to permit the triac 24 to conduct. The triac 24 is held in non-conduction when the sensor terminal Cc is open.

The lens 30 has a housing 32. The housing 32 has a mating surface 32a for mating engagement with the camera 10. A male connector 34 is mounted on the mating surface 32a of the housing 32 and includes power input terminals A_{L} and B_{L} and a sensor terminal C_{L}. The input terminals A_{L} and B_{L} are connected to a power source (not shown) for driving the lens 30, a heater or defogger (not shown) and the like. The sensor terminal C_{L} is connected to the housing 32 at ground potential.

When the lens 30 is mounted on the camera 10, the mating surface 12a of the camera 10 and the mating surface 32a of the lens 30 are brought into close contact with each other, resulting in that the female connector 14 and the male connector 34 are interconnected together to cause the sensor terminal Cc to be grounded through the sensor terminal C_{L}. As this occurs, the control circuit 26 is operable to permit the triac 24 to conduct. When the lens 30 is mounted, the mating surface 32a is urged against the three push-button switches 16. Upon complete connection of the lens 30 to the camera 10, all the three push-button switches are rendered "on", and the relay 20 is energized to render the relay contacts 20a and 20b closed.

When the relay contacts 20a and 20b are rendered closed and the triac 24 is permitted to conduct, an output voltage is applied from the AC power source 22 to the output terminals Ac and Bc of the female connector 14. Power is then supplied to the heater or other loads within the lens 30 via the input terminals A_{L} and B_{L}.

The three push-button switches 16 are connected in series and operable to develop sensor signals in the form of logical product so that the relay contacts 20a and 20b of the relay 20 will in no way be rendered closed unless all the three push-button switches 16 detect complete mounting of the lens 30. In addition, the triac 24 is rendered operative on receipt of a sensor signal from the sensor terminal Cc. This sensor signal also utilizes logical product. With these two safety measures, the user will in no way suffer from a electrical shock upon accidental contact with the output terminals Ac and Bc. This is because no voltage is applied from the AC power source 22 to the output terminals Ac and Bc of the female connector 14 when the lens 30 is not mounted or when the lens 30 is incompletely mounted on the camera 10.

In Fig. 1, the female connector 14 of the camera 10 is provided with the three terminals Ac to Cc. It should be noted, however, that the female connector 14 includes various other terminals which are omitted for clarity of illustration. This is also the case with other electronic components arranged within the camera 10 and the lens 30.

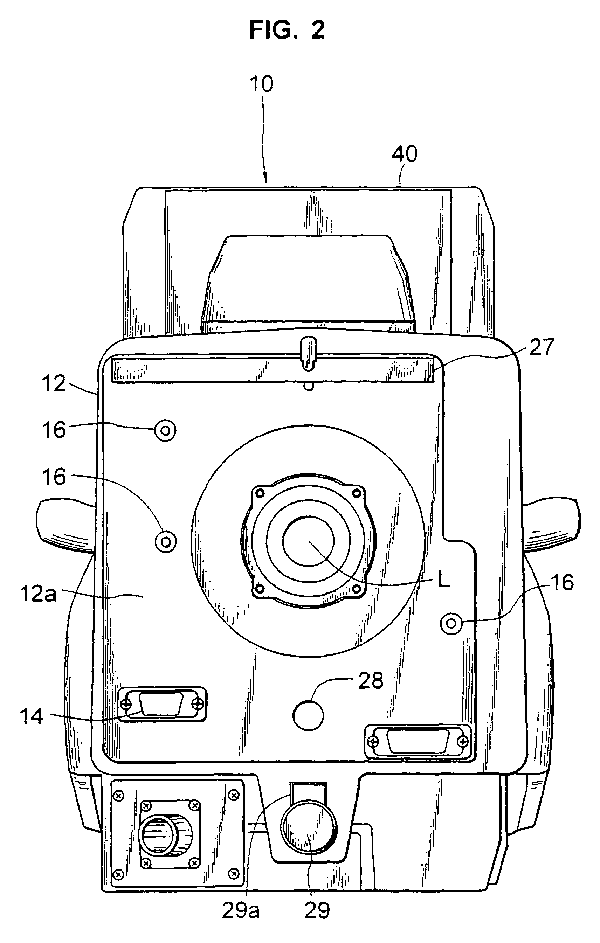

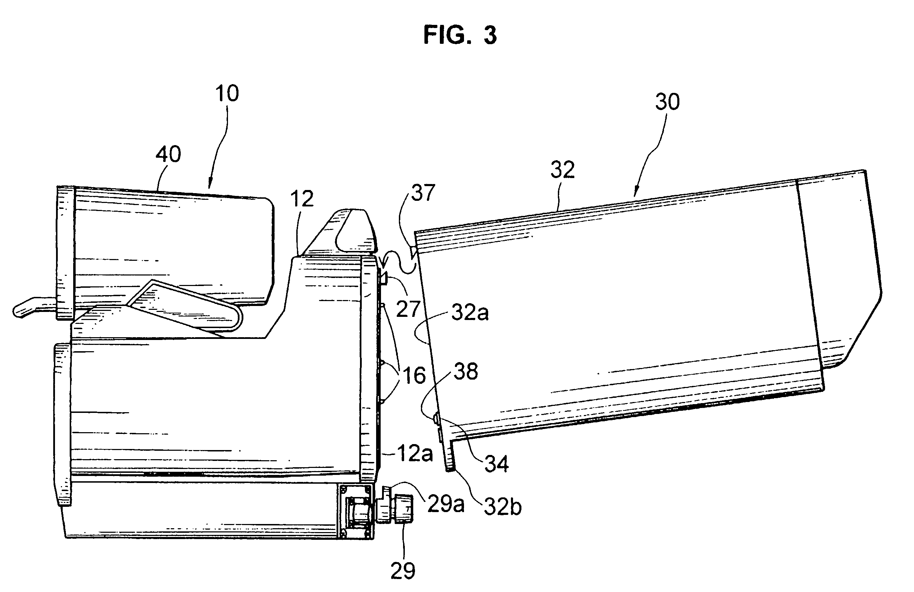

Reference will next be made to the location of the push-button switches 16. Fig. 2 is a front view showing the outer appearance of the camera 10. Fig. 3 is a side view showing the manner in which the lens 30 is mounted on the camera 10. In these two figures, reference numerals 27, 28, 29, 37, 38 and 40 designate a mount, an alignment recess, a locking device, a hook, an alignment projection, and a monitor, respectively.

Of the three push-button switches 16, one is located on the right side with respect to an optical axis L of the camera 10, whereas the other two are located on the left side with respect to the optical axis L and vertically spaced from each other. The three push-button switches 16 are arranged so that they may not be simultaneously pushed by only one hand. The arrangement of the push-button switches 16 at given intervals avoids accidental or inadvertent operation.

Now, the manner of mounting of the lens 30 on the camera 10 will be described. The mount 27 is attached to the upper portion of the mating surface 12a of the camera 10 and tapered at a top surface thereof to have a V-shape. The hook or projection 37 is attached to the upper portion of the mating surface 32a of the lens 30 and tapered at a bottom surface thereof to have an inverted V-shape. As shown in Fig. 3, the hook 37 is first engaged with the mount 27 from above. The mating surfaces 12a and 32a are then brought into mating engagement with each other. Thereafter, the locking device 29 is rotated to permit locking engagement of a locking element 29a with a projection 32b of the lens 30.

To align the lens 30 with the camera 10, the alignment projection 38 of the lens 30 is fitted into the alignment recess 28 of the camera 10. The connector 14 of the camera 10 and the connector 34 of the lens 30 are then interconnected together to provide connection between the terminals. Engagement of the hook 37 with the mount 27 permits the lens 30 to be grounded. Also, grounding takes place when the connector 14 of the camera 10 and the connector 34 of the lens 30 are interconnected together.

In the foregoing embodiment, the push-button switches 16 are three in number. However, the present invention is not limited thereto. Also, any other types of mechanical switches may be employed as far as they are capable of converting mechanical displacement to an electrical signal. Further, any types of mechanical contacts, in lieu of the relay contacts 20a and 20b, may be employed.

## Claims

1. A broadcasting television camera (10) comprising a mating surface (12a) adapted to mount a lens (30) thereon, and exposed power output terminals (Ac, Bc) arranged on the mating surfaces (12a) to supply power from a power source (22) to the lens (30), **characterized by**:
means for according user injury by electric shock from high voltage on the exposed output terminal,
said means comprising a plurality of first sensors (16) attached to said mating surface(12a) for detecting mounting of the lens (30),
each sensor being adapted to be actuated by a mating surface (32a) of the lens (30),
said first sensors (16) being spaced apart over the mating surface (12a);
and mechanical contacts (20a, 20b), each disposed between said high voltage power source (22) and a respective one of said power output terminals (Ac, Bc), rendered operative to apply said high voltage through the mechanical contacts (20a, 20b) to said power output terminals (Ac, Bc) only when all of said plurality of first sensors (16) detect complete mounting of the lens (30).

2. A broadcasting television camera according to claim 1 wherein the lens (30) includes a mating surface (32a) for mating engagement with said mating surface (12a) of the camera (10); and
said plurality of first sensors (16) comprise push-button switches which are actuated by said mating surface (32a) of the lens (30) and connected in series.

3. A broadcasting television camera according to any preceding claim having a second sensor (Cc) mounted on said mating surface (12a) for detecting mounting of the lens (30), and an electrical contact (24) rendered operative when said second sensor (Cc) detects complete mounting of the lens (30), whereby a voltage is applied to said power output terminals (Ac, Bc) when said mechanical contacts (20a, 20b) and said electrical contact (24) are simultaneously rendered operative.

4. A broadcasting television camera according to claim 3 wherein said electrical contact (24) comprises a triac; and
said second sensor (Cc) comprises a sensor terminal arranged on said mating surface (12a) of the camera (10) and connected to a control circuit (26) for controlling said triac (24).

## Patentansprüche

1. Rundfunk-Fernsehkamera (10), die eine Berührungsfläche (12a) zum Anbringen einer Linse (30) daran und an den Berührungsflächen (12a) angeordnete freiliegende Energieausgangsanschlusspunkte (Ac, Bc) zum Zuführen von Energie aus einer Energiequelle (22) zu der Linse (30) umfasst, **gekennzeichnet durch**:
Mittel zum Vermeiden von Benutzerverletzungen **durch** elektrischen Schock auf Grund von Hochspannung an den freiliegenden Anschlusspunkten, wobei die genannten Mittel eine Mehrzahl von an der genannten Berührungsfläche (12a) angebrachten ersten Sensoren (16) zum Erkennen der Anbringung der Linse (30) umfassen;
wobei jeder Sensor ausgestaltet ist, um von einer Berührungsfläche (32a) der Linse (30) betätigt zu werden;
wobei die genannten ersten Sensoren (16) auf der Berührungsfläche (12a) voneinander beabstandet angeordnet sind;
und mechanische Kontakte (20a, 20b), die jeweils zwischen der genannten Hochspannungs-Energiequelle (22) und einem jeweiligen der genannten Energieausgangsanschlusspunkte (Ac, Bc) angeordnet sind, wobei sie nur dann zum Anlegen der genannten Hochspannung **durch** die mechanischen Kontakte (20a, 20b) an die genannten Energieausgangsanschlusspunkte (Ac, Bc) funktionsfähig werden, wenn alle der genannten Mehrzahl von ersten Sensoren (16) die vollständige Anbringung der Linse (30) erkennen.

2. Rundfunk-Fernsehkamera nach Anspruch 1, bei der die Linse (30) eine Berührungsfläche (32a) zur passenden Anlage an der genannten Berührungsfläche (12a) der Kamera (10) aufweist und
wobei die genannte Mehrzahl von ersten Sensoren (16) Druckknopfschalter umfasst, die von der genannten Berührungsfläche (32a) der Linse (30) betätigt werden und in Reihe geschaltet sind.

3. Rundfunk-Fernsehkamera nach einem der vorhergehenden Ansprüche mit einem an der genannten Berührungsfläche (12a) angebrachten zweiten Sensor (Cc) zum Erkennen der Anbringung der Linse (30) und einem elektrischen Kontakt (24), der funktionsfähig wird, wenn der genannte zweite Sensor (Cc) die vollständige Anbringung der Linse (30) erkennt, wodurch eine Spannung an die genannten Energieausgangsanschlusspunkte (Ac, Bc) angelegt wird, wenn die genannten mechanischen Kontakte (20a, 20b) und der genannte elektrische Kontakt (24) gleichzeitig funktionsfähig werden.

4. Rundfunk-Fernsehkamera nach Anspruch 3, bei der der genannte elektrische Kontakt (24) einen Triac umfasst und
wobei der genannte zweite Sensor (Cc) einen Sensoranschlusspunkt umfasst, der an der genannten Berührungsfläche (12a) der Kamera (10) angeordnet ist und mit einer Steuerschaltung (26) zum Steuern des genannten Triacs (24) verbunden ist.

## Revendications

1. Caméra de télédiffusion (10) comprenant une surface d'ajustement (12a) adaptée pour le montage d'une lentille (30) sur celle-ci, et des bornes de sortie d'alimentation exposées (Ac, Bc) agencées sur les surfaces d'ajustement (12a) afin de fournir une alimentation depuis une source d'alimentation (22) à la lentille (30), **caractérisée par** :
un moyen pour éviter une blessure de l'utilisateur par choc électrique résultant de la haute tension présente sur les bornes de sortie exposées,
une pluralité de premiers capteurs (16) fixés sur ladite surface d'ajustement (12a) pour détecter le montage de la lentille (30),
chaque capteur étant adapté pour être actionné par une surface d'ajustement (32a) de la lentille (30),
lesdits premiers capteurs (16) étant espacés sur la surface d'ajustement (12a) ;
et des contacts mécaniques (20a, 20b), disposés chacun entre ladite source d'alimentation à haute tension (22) et une borne respective desdites bornes de sortie d'alimentation (Ac, Bc), rendus opérationnels pour appliquer ladite haute tension par le biais des contacts mécaniques (20a, 20b) auxdites bornes de sortie d'alimentation (Ac, Bc) seulement quand toute ladite pluralité de premiers capteurs (16) détectent le montage complet de la lentille (30).

2. Caméra de télédiffusion selon la revendication 1, dans laquelle la lentille (30) comporte une surface d'ajustement (32a) destinée à s'engager de manière ajustée avec ladite surface d'ajustement (12a) de la caméra (10) ; et
ladite pluralité de premiers capteurs (16) comprend des commutateurs à bouton poussoir qui sont actionnés par ladite surface d'ajustement (32a) de la lentille (30) et connectés en série.

3. Caméra de télédiffusion selon l'une quelconque des revendications précédentes, comportant un deuxième capteur (Cc) monté sur ladite surface d'ajustement (12a) pour détecter le montage d'une lentille (30), et un contact électrique (24) rendu opérationnel quand ledit deuxième capteur (Cc) détecte le montage complet de la lentille (30), où une tension est appliquée aux bornes de sortie d'alimentation (Ac, Bc) quand lesdits contacts mécaniques (20a, 20b) et ledit contact électrique (24) sont rendus opérationnels simultanément.

4. Caméra de télédiffusion selon la revendication 3, dans laquelle ledit contact électrique (24) comprend un triac ; et
ledit deuxième capteur (Cc) comprend une borne de capteur agencée sur ladite surface d'ajustement (12a) de la caméra (10) et connectée à un circuit de commande (26) pour commander ledit triac (24).
